# DEMANDE DE BREVET EUROPEEN

(11) **EP 4 748 707 A1**
(43) Date de publication de la demande: **27.05.2026**
(21) Numéro de dépôt: 25213571.0
(22) Date de dépôt: 05.11.2025
(51) Int. Cl.: B64C 5/00, B64C 5/02, B64D 37/32

(54) **ENSEMBLE DE DÉRIVE POUR UN AÉRONEF COMPORTANT DES CANALISATIONS À L'AVANT DE LA DÉRIVE**

(30) Priorité: 26.11.2024 FR 2413013
(71) Demandeur: AIRBUS OPERATIONS (S.A.S.), 31060 Toulouse (FR)
(72) Inventeur: MILLIERE, Jérôme, 31060 TOULOUSE (FR); ROMERO HERNANDEZ, Andrea, 31060 TOULOUSE (FR); CASTERAN, Marc, 31700 BLAGNAC (FR); DUMAS, Samuel, 31700 BLAGNAC (FR)
(74) Mandataire: Airbus-OPS SAS

(57) **Abrégé**

L'invention concerne un ensemble de dérive (100) pour un aéronef, ledit ensemble de dérive (100) comportant une dérive (101) avec un longeron avant (102), une pluralité de nervures (150), où les nervures (150) sont disposées le long du longeron avant (102), où chaque nervure (150) présente un pied (152) solidaire du longeron avant (102) et une tête (154) solidaire du pied (152), au moins une canalisation (104) s'étendant le long du longeron avant (102) et à l'arrière de chaque tête (154), et un capot fixé aux têtes (154).

Avec un tel arrangement, les têtes des nervures assurent avec le capot une protection contre les chocs d'oiseaux pour protéger les canalisations.

## Description

### DOMAINE TECHNIQUE

La présente invention concerne un ensemble de dérive pour un aéronef où ledit ensemble de dérive comporte des canalisations qui assurent le transport d'un gaz, tel que le dihydrogène, le long du bord d'attaque d'une dérive. L'invention concerne également un aéronef comportant un tel ensemble de dérive.

### ÉTAT DE LA TECHNIQUE ANTÉRIEURE

Dans un aéronef, il est connu d'utiliser des réservoirs pour contenir des fluides comme par exemple du dihydrogène sous pression. Lorsque la pression augmente trop, il est souhaitable d'évacuer le dihydrogène gazeux vers l'extérieur de l'aéronef. À cette fin, il est connu d'utiliser des canalisations qui sont fluidiquement connectées entre le réservoir et une buse débouchant à l'extérieur de l'aéronef.

Même si une telle installation donne satisfaction, il est souhaitable de trouver un arrangement qui assure une bonne sécurité au regard des éventuels chocs d'oiseaux.

Le document EP 2 886 452 B1 décrit un ensemble de dérive pour aéronef selon l'art antérieur.

### EXPOSÉ DE L'INVENTION

Un objet de la présente invention est de proposer un ensemble de dérive pour aéronef où les canalisations qui assurent le guidage du gaz, en particulier du dihydrogène, vers l'extérieur de l'aéronef sont protégées contre les chocs d'oiseaux et où une éventuelle fuite des canalisations est sans risque pour l'aéronef.

À cet effet, est proposé un ensemble de dérive pour un aéronef, ledit ensemble de dérive comportant :
- une dérive avec un longeron avant,
- une pluralité de nervures, où les nervures sont disposées le long du longeron avant, où chaque nervure présente un pied solidaire du longeron avant et une tête solidaire du pied,
- au moins une canalisation s'étendant le long du longeron avant et à l'arrière de chaque tête, et
- un capot fixé aux têtes et recouvrant ladite au moins une canalisation.

Avec un tel arrangement, les têtes des nervures assurent avec le capot une protection contre les chocs d'oiseaux pour protéger les canalisations.

Avantageusement, entre deux nervures successives, ledit ensemble de dérive comporte une poutre fixée entre les têtes desdites nervures successives.

Avantageusement, le capot est percé de fenêtres de ventilation.

Avantageusement, le capot est percé d'au moins un orifice et pour ledit au moins un orifice, l'ensemble de dérive comporte un système d'aération fluidiquement connecté audit orifice et assurant un effet Venturi.

Selon un mode de réalisation particulier, pour au moins une canalisation, ledit ensemble de dérive comporte un canal comportant un caniveau dans lequel est fixée ladite au moins une canalisation, où le caniveau est fixé aux nervures et présente des parois latérales délimitant entre elles une ouverture et s'étendant jusqu'au capot, où le caniveau présente à l'opposé de l'ouverture un fond.

Avantageusement, les fenêtres de ventilation sont en continuité fluidique avec l'ouverture.

Avantageusement, les orifices sont en continuité fluidique avec l'ouverture.

Avantageusement, le caniveau comporte un plancher intermédiaire qui sépare le caniveau en un caniveau supérieur dans lequel est fixée ladite au moins une canalisation et un caniveau inférieur dans lequel circule de l'air, et le plancher intermédiaire est percé de trous.

Selon un autre mode de réalisation particulier non revendiqué, il y a une pluralité de canalisations et, pour ladite pluralité de canalisations, l'ensemble de dérive comporte une canalisation de recouvrement dans laquelle ladite pluralité de canalisations est fixée et où ladite canalisation de recouvrement s'étend le long du longeron avant et à l'arrière de chaque tête.

Avantageusement, l'ensemble de dérive comporte des anneaux de maintien où chacun est logé dans la canalisation de recouvrement, entoure ladite pluralité de canalisations et, pour chaque canalisation de ladite pluralité, présente une première empreinte à travers laquelle ladite canalisation passe, et des inserts de maintien où chacun est disposé entre les canalisations de ladite pluralité et, pour chaque canalisation de ladite pluralité, présente une deuxième empreinte à travers laquelle ladite canalisation passe.

Avantageusement, la dérive présente un bord supérieur, ladite au moins une canalisation présente une section qui s'étend le long dudit bord supérieur et ledit ensemble de dérive comporte une cage solidaire de la dérive et où ladite section est arrangée entre la dérive et la cage.

L'invention propose également un aéronef comportant un fuselage et un ensemble de dérive selon l'une des variantes précédentes où la dérive est fixée à l'arrière du fuselage.

### BRÈVE DESCRIPTION DES DESSINS

Les caractéristiques de l'invention mentionnées ci-dessus, ainsi que d'autres, apparaîtront plus clairement à la lecture de la description suivante d'un exemple de réalisation et de ses variantes, ladite description étant faite en relation avec les dessins joints, parmi lesquels :
La figure 1 est une vue de côté de l'arrière d'un aéronef selon l'invention,
La figure 2 est une vue en perspective d'un ensemble de dérive selon un premier mode de réalisation de l'invention,
La figure 3 est une vue en perspective d'une nervure mise en œuvre dans un ensemble de dérive selon le premier mode de réalisation de l'invention,
La figure 4 est une vue de l'ensemble de dérive de la figure 2 selon la flèche IV,
La figure 5 est une vue en perspective d'un capot mis en œuvre dans un ensemble de dérive selon l'invention,
La figure 6 est une vue en coupe d'un système d'aération assurant un effet Venturi et mis en œuvre dans un ensemble de dérive selon l'invention,
La figure 7 est une vue en perspective d'un ensemble de dérive selon un deuxième mode de réalisation de l'invention,
La figure 8 est une vue en perspective d'une partie de l'ensemble de dérive de la figure 7,
La figure 9 est une vue de face d'un anneau de maintien mis en œuvre dans un ensemble de dérive selon le deuxième mode de réalisation de l'invention,
La figure 10 est une vue de face d'un insert de maintien mis en œuvre dans un ensemble de dérive selon le deuxième mode de réalisation de l'invention, et
La figure 11 est une vue en perspective d'une cage mise en œuvre dans un ensemble de dérive selon l'invention.

### EXPOSÉ DÉTAILLÉ D'UN EXEMPLE DE RÉALISATION

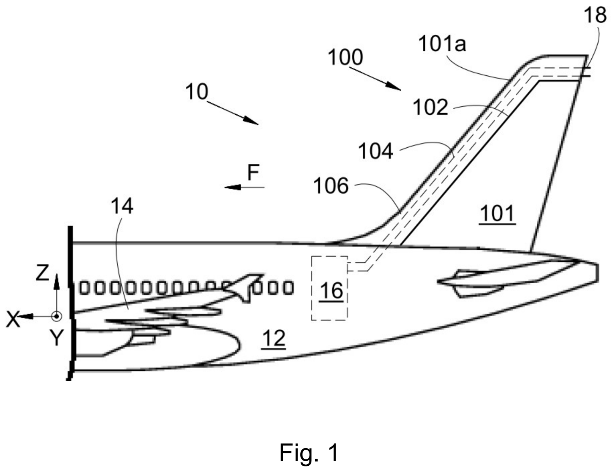

La figure 1 montre un aéronef 10 qui présente un fuselage 12 de part et d'autre duquel est fixée une aile 14.

Par convention, on appelle X la direction longitudinale de l'aéronef 10, Y la direction transversale de l'aéronef 10 qui est horizontale lorsque l'aéronef 10 est au sol, et Z la direction verticale ou hauteur verticale lorsque l'aéronef 10 est au sol, ces trois directions X, Y et Z étant orthogonales entre elles.

D'autre part, les termes de position comme " avant " et " arrière " sont à considérer par rapport à une direction d'avancement de l'aéronef 10 lors du fonctionnement des systèmes de propulsion de l'aéronef 10, cette direction étant représentée schématiquement par la flèche F.

L'aéronef 10 comporte également un ensemble de dérive 100 selon l'invention, où ledit ensemble de dérive 100 comporte entre autres une dérive 101 fixée à l'arrière du fuselage 12.

Dans le mode de réalisation de l'invention représenté à la figure 1, l'aéronef 10 est équipé d'un réservoir 16 contenant un fluide. Même si dans le réservoir 16, le fluide peut être en phase liquide, sous certaines conditions, il peut être en phase gazeuse comme le dihydrogène. Pour assurer l'évacuation du gaz vers l'extérieur de l'aéronef 10 en cas de besoin, l'aéronef 10 comporte des canalisations 104, où chacune est fluidiquement connectée entre le réservoir 16 et une buse 18 qui débouche à l'extérieur de l'aéronef 10 et qui est arrangée à l'arrière de la dérive 101, en particulier au niveau de son bord de fuite.

La dérive 101 présente un longeron avant 102 et des canalisations 104 qui font partie de l'ensemble de dérive 100 qui s'étendent à l'arrière du bord d'attaque 101a de la dérive 101. Le longeron avant 102 s'étend de manière globalement verticale et la dérive 101 comporte également un capot 106 qui recouvre le longeron avant 102 et porte le bord d'attaque 101a.

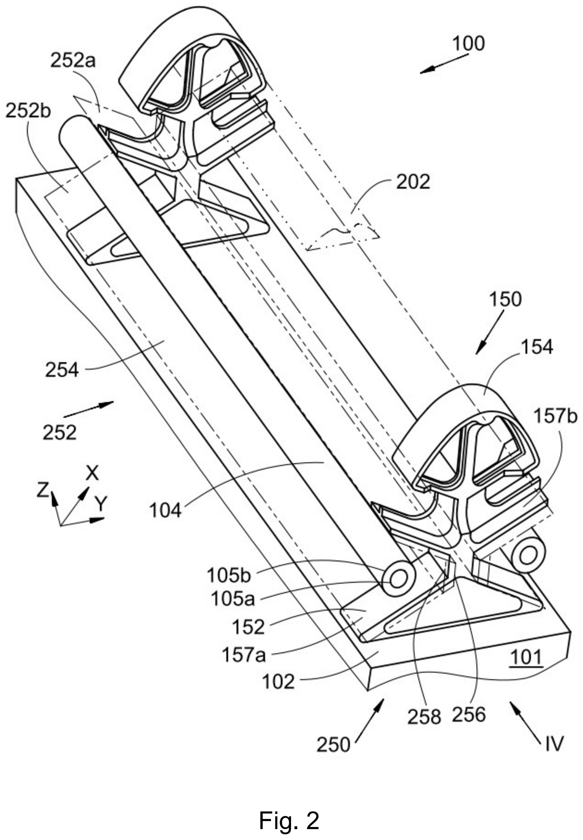

D'une manière générale, il y a au moins une canalisation 104. Le longeron avant 102 s'étend de l'avant vers l'arrière en progressant du bas vers le haut, c'est-à-dire à partir du fuselage 12. La figure 2 montre l'ensemble de dérive 100 installé le long du longeron avant 102 à l'arrière du bord d'attaque 101a sans le capot 106 pour une meilleure visibilité.

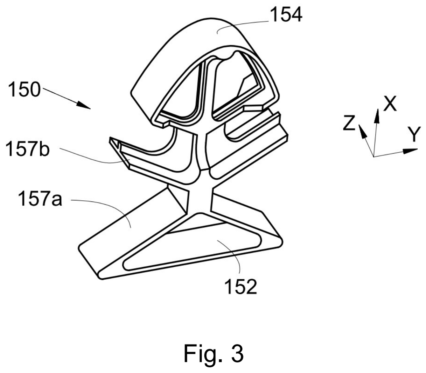

L'ensemble de dérive 100 comporte également une pluralité de nervures 150 (ici seulement deux nervures 150 sont représentées) où les nervures 150 sont disposées le long du longeron avant 102 de la dérive 101. La figure 3 montre une nervure 150 et chaque nervure 150 présente un pied 152 solidaire du longeron avant 102. La fixation du pied 152 est réalisée par tous moyens appropriés comme des éléments de visserie, des rivets, de la colle, etc. La nervure 150 comporte également une tête 154 qui est solidaire du pied 152 et qui se projette vers l'avant par rapport au longeron avant 102. Les nervures 150 sont à l'avant du longeron avant 102.

Comme le montre la figure 2, les canalisations 104 sont à l'arrière des têtes 154, c'est-à-dire entre le pied 152 et la tête 154 de chaque nervure 150. Chaque canalisation 104 est ainsi en avant par rapport au longeron avant 102 et court le long de ce dernier et à l'arrière des têtes 154 et du capot 106.

Chaque tête 154 assure un renfort structurel pour le capot 106 et une protection contre les chocs d'oiseaux pour les canalisations 104 qui sont derrière par rapport à la direction d'avancement F.

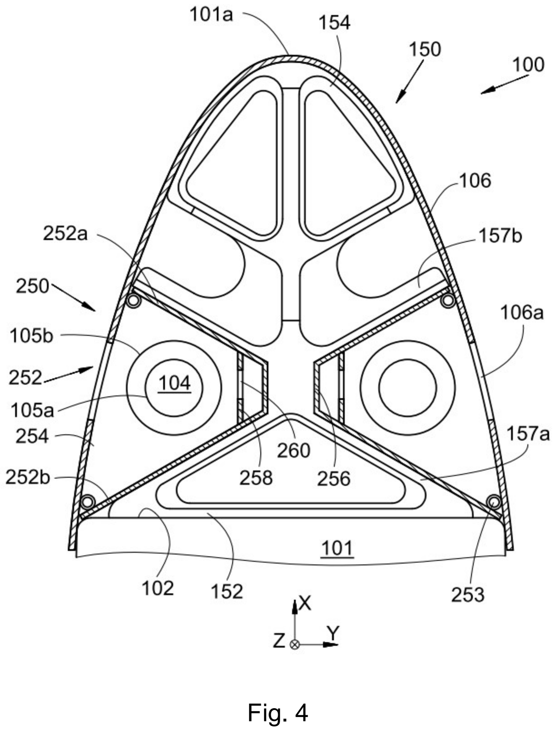

Comme le montre la figure 4, l'ensemble de dérive 100 comporte également le capot 106 qui est fixé aux têtes 154 et les recouvre. Le capot 106 assure la fonction aérodynamique et assure avec les têtes 154, la protection contre les chocs d'oiseaux. Le capot 106 recouvre ainsi les canalisations 104, les nervures 150 et le longeron avant 102 et ainsi préférentiellement, le capot 106 présente un profil aérodynamique et enveloppe le longeron avant 102.

La tête 154 et le pied 152 peuvent constituer un même élément monobloc et monomatière, mais ils peuvent constituer deux éléments fixés l'un à l'autre et être constitués par exemple de matériaux différents de manière à adapter la résistance mécanique de chacun à sa propre fonction. Par exemple la tête peut prendre la forme d'une arche métallique.

Chaque nervure 150 s'étend de l'arrière vers l'avant depuis son pied 152 fixé au longeron avant 102 et sa tête 154 se projette vers l'avant depuis le longeron avant 102 de la dérive 101.

Pour limiter les risques de fuites des canalisations 104, en particulier dans le cas de dihydrogène, chaque canalisation 104 est préférentiellement à double peau avec une peau intérieure 105a et une peau extérieure 105b autour de la peau intérieure 105a dans laquelle circule le gaz.

Pour renforcer la protection contre les chocs entre deux nervures 150 successives, l'ensemble de dérive 100 comporte, entre les deux nervures 150, une poutre 202 fixée entre les têtes 154 desdites nervures 150. Sur la figure 2, seule une portion de la poutre 202 est représentée en traits mixtes à deux points. Chaque extrémité de la poutre 202 est fixée à une tête 154 par tous moyens de fixation appropriés. La poutre 202 peut également être monobloc avec au moins l'une des nervures 150.

Les canalisations 104 se retrouvent alors à l'arrière de la poutre 202 et le capot 106 recouvre également la poutre 202.

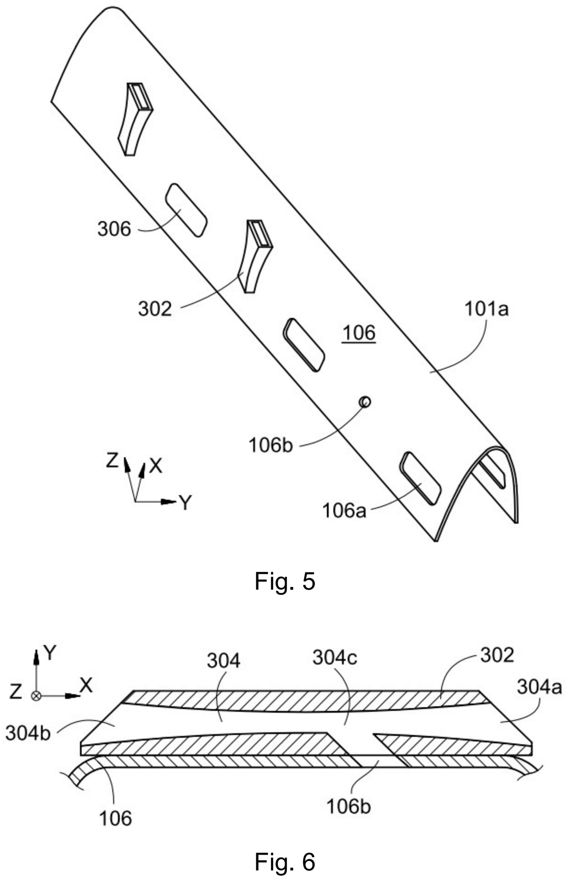

Comme le montre plus clairement la figure 5, le capot 106 est percé, à l'arrière du bord d'attaque 101a, de fenêtres de ventilation 106a qui améliorent la ventilation à l'intérieur dudit capot 106 et l'évacuation du gaz en cas de fuite.

Pour améliorer encore l'évacuation du gaz, le capot 106 est percé d'au moins un orifice 106b et pour chaque orifice 106b, l'ensemble de dérive 100 comporte un système d'aération 302 qui est fixé à l'extérieur du capot 106 et qui est fluidiquement connecté à l'orifice 106b.

La figure 6 montre une coupe du système d'aération 302 qui assure un effet Venturi.

Ici, le système d'aération 302 présente un conduit 304 avec une entrée 304a et une sortie 304b, où l'entrée 304a est orientée vers l'avant de l'aéronef 10 et où la sortie est orientée vers l'arrière de l'aéronef 10. Entre l'entrée 304a et la sortie 304b, le conduit 304 présente une zone intermédiaire 304c dont la section est inférieure à la section de l'entrée 304a et à la section de la sortie 304b. L'orifice 106b est fluidiquement connecté à la zone intermédiaire 304c.

Sur le premier mode de réalisation de l'invention, pour chaque canalisation 104, l'ensemble de dérive 100 comporte un canal 250 qui comprend un caniveau 252 dans lequel est fixée la canalisation 104. Bien sûr d'une manière générale, ceci s'applique pour au moins une canalisation 104. La fixation de la canalisation 104 s'effectue à l'aide de tous moyens de fixation appropriés comme par exemple à l'aide d'entretoises et de colliers de serrage.

Le caniveau 252 est fixé aux nervures 150 par tous moyens de fixation appropriés et il présente deux parois latérales 252a-b qui délimitent entre elles une ouverture 254. Les parois latérales 252a-b s'étendent jusqu'à une face intérieure du capot 106.

Ici il y a un canal 250 de chaque côté et chaque caniveau 252 forme ainsi avec le capot 106, un volume fermé pour contenir une éventuelle fuite d'une canalisation 104.

Pour limiter encore mieux les risques d'écoulement du gaz entre les parois latérales 252a-b et le capot 106, des joints 253 sont prévus aux interfaces entre les parois latérales 252a-b et le capot 106. Chaque joint 253 prend ici la forme d'un boudin.

À l'opposé de l'ouverture 254, le caniveau 252 présente un fond 256.

Ici, chaque paroi latérale 252a-b s'appuie contre une paroi de la nervure 150, en particulier une paroi inférieure 157a du pied 152 et une paroi supérieure 157b entre le pied 152 et la tête 154. Chaque canal 250 s'étend ainsi le long du longeron avant 102.

Dans ce mode de réalisation, les fenêtres de ventilation 106a sont en continuité fluidique avec l'ouverture 254 qui est du même côté et de la même manière, les orifices 106b sont en continuité fluidique avec l'ouverture 254 qui est du même côté.

Pour limiter l'impact des fenêtres de ventilation 106a sur la traînée de l'aéronef 10 en vol, chaque fenêtre de ventilation 106a est fermée par un bouchon 306 réalisé d'un matériau respirant pour le dihydrogène, c'est-à-dire que le bouchon 306 est imperméable pour l'eau extérieure qui ne peut pas pénétrer dans le canal 250, et perméable, entre autres pour le dihydrogène qui est présent dans le canal 250 et peut s'évacuer vers l'extérieur. Le bouchon 306 est réalisé par exemple en polypropylène ou polyéthylène.

Pour éviter qu'en cas d'incendie, le feu reste confiné dans le canal 250 du fait de la présence des bouchons 306, chaque bouchon 306 est constitué d'un matériau susceptible de rompre sous l'effet de la chaleur, comme par exemple en polypropylène ou polyéthylène. En rompant sous l'effet de la chaleur, le bouchon 306 constitue un fusible qui permet d'ouvrir la fenêtre de ventilation 106a en cas de besoin pour souffler les flammes. En particulier, le matériau pour le bouchon 306 est choisi de manière à rompre lorsque la température à l'intérieur du caniveau 252 atteint une valeur inférieure à la température maximale acceptable par le caniveau 252 et la canalisation 104 installée dans le caniveau 252, c'est-à-dire la température à partir de laquelle l'intégrité du caniveau 252 et de la canalisation 104 n'est plus garantie.

En cas de surpression, il est également possible de prévoir que le couvercle 306 se rompt sous l'effet de la surpression limitant ainsi les risques de rupture du caniveau 252. À cette fin, la résistance au déchirement du couvercle 306 est inférieure à la résistance au déchirement du caniveau 252, par exemple par la réalisation de zones moins épaisses.

Dans le mode de réalisation de l'invention présenté ici, le caniveau 252 comporte un plancher intermédiaire 258 qui est à distance du fond 256 et sépare le caniveau 252 en un caniveau supérieur dans lequel est fixée la canalisation 104 et un caniveau inférieur dans lequel circule de l'air provenant par exemple d'un système d'aération. Le caniveau supérieur s'étend entre le plancher intermédiaire 258 et le capot 106, et le caniveau inférieur s'étend entre le fond 256 et le plancher intermédiaire 258.

Pour permettre le passage de l'air du caniveau inférieur vers le caniveau supérieur, le plancher intermédiaire 258 est percé de trous 260 qui permettent selon leur disposition d'assurer une ventilation homogène du caniveau supérieur.

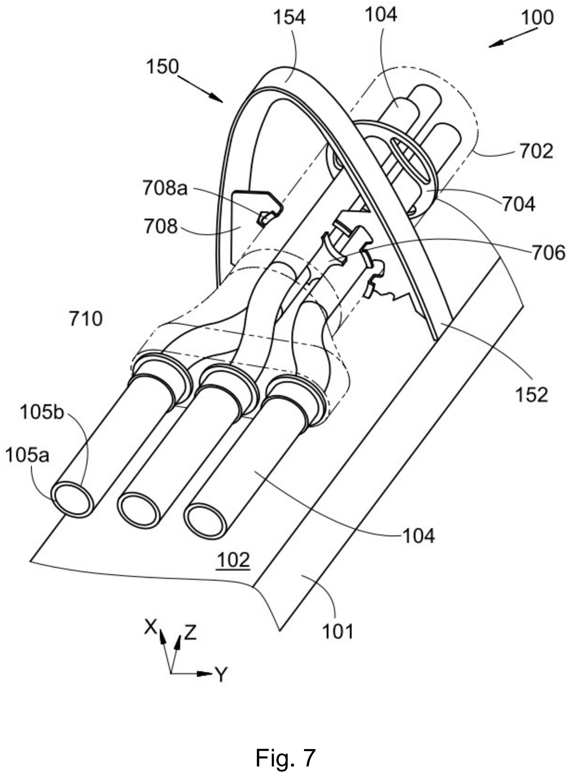

Dans le deuxième mode de réalisation non revendiqué représenté sur les Figs. 7 à 10, les canalisations 104 à double peau sont remplacées par des canalisations 104 à simple peau qui sont enfermées dans une canalisation de recouvrement 702 (ici en traits mixtes). Un tel arrangement permet un gain de place car l'encombrement de canalisations simple peau dans une canalisation de recouvrement est moindre que l'encombrement de canalisations double peau.

Dans le mode de réalisation de l'invention représenté ici, il y a trois canalisations 104.

Ainsi, l'ensemble de dérive 100 comporte la canalisation de recouvrement 702 dans laquelle la pluralité de canalisations 104 est montée et fixée. La canalisation de recouvrement 702 s'étend le long du longeron avant 102 et à l'arrière de chaque tête 154.

La canalisation de recouvrement 702 traverse ainsi chaque nervure 150 et y est fixée par des moyens de fixation 708 appropriés.

Les moyens de fixation 708 prennent ici la forme de doigts 708a qui sont élastiques, solidaires de la nervure 150 et qui sont répartis sur le pourtour de la canalisation de recouvrement 702. Les doigts 708a sont en appui contre la canalisation de recouvrement 702.

La canalisation de recouvrement 702 peut être mise au vide ou remplie d'un gaz inerte avec le dihydrogène.

Bien que les fenêtres de ventilation 106a et le système d'aération 302 ont été explicités sur le premier mode de réalisation, ils peuvent être mis en place de la même manière sur le deuxième mode de réalisation.

Dans le mode de réalisation de l'invention représenté à la figure 7, l'ensemble de dérive 100 comporte une boîte de concentration 710 (en traits mixtes) qui ferme la canalisation de recouvrement 702 au niveau de son extrémité inférieure. Dans le sens de l'écoulement du gaz dans les canalisations 104, en amont de la boîte de concentration 710, les canalisations 104 sont à double peau et en aval de la boîte de concentration 710, les canalisations 104 sont à simple peau. La boîte de concentration 710 forme la deuxième peau des canalisations 104 comme la canalisation de recouvrement 702.

Ainsi, la peau intérieure 105a de la canalisation 104 à double peau devient la peau de la canalisation 104 simple peau en traversant de manière étanche une paroi de la boîte de concentration 710, tandis que la peau extérieure 105b de la canalisation 104 à double peau est fixée de manière étanche à une paroi de la boîte de concentration 710.

Pour assurer la fixation des canalisations 104 dans la canalisation de recouvrement 702, l'ensemble de dérive 100 est équipé de moyens de fixation qui comportent ici des anneaux de maintien 704 et des inserts de maintien 706. Il y a plusieurs anneaux de maintien 704 et inserts de maintien 706 répartis sur la longueur de la canalisation de recouvrement 702. Il y a un anneau de maintien 704 entre deux inserts de maintien 706 et un insert de maintien 706 entre deux anneaux de maintien 704.

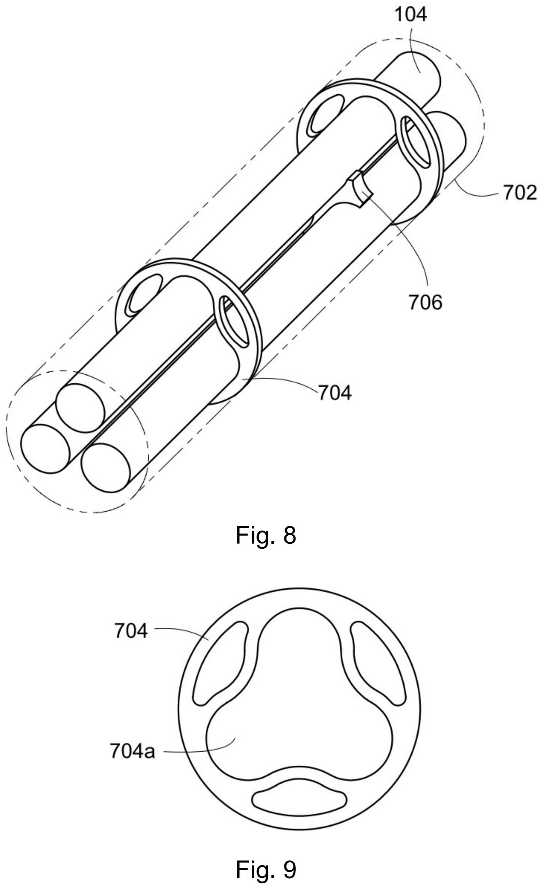

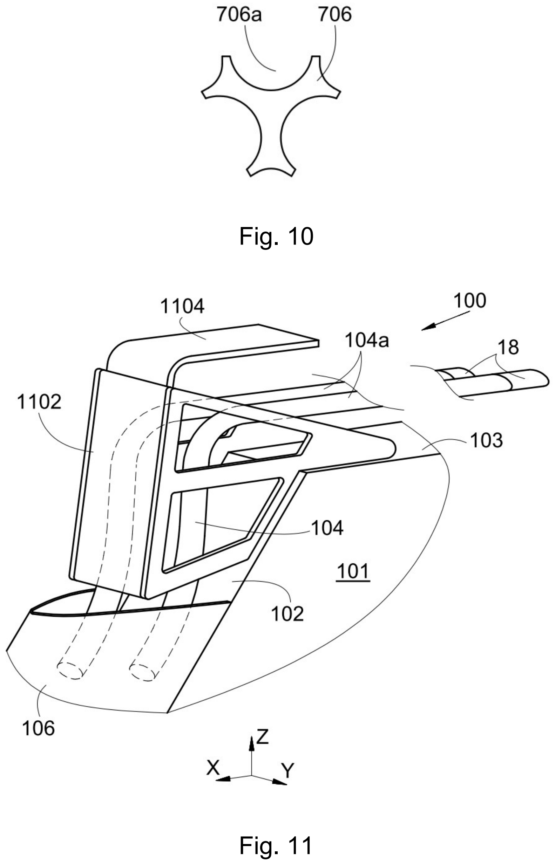

La figure 9 montre l'anneau de maintien 704 et la figure 10 montre l'insert de maintien 706.

Chaque anneau de maintien 704 présente ici une forme circulaire adaptée au diamètre intérieur de la canalisation de recouvrement 702 pour s'y insérer aisément. Chaque anneau de maintien 704 est ainsi logé dans la canalisation de recouvrement 702 et entoure la pluralité de canalisations 104. Pour permettre le passage de chaque canalisation 104 dans l'anneau de maintien 704, ce dernier présente pour chaque canalisation 104, une première empreinte 704a à travers laquelle passe la canalisation 104. Les empreintes 704a, ici au nombre de trois, sont toutes ouvertes vers l'intérieur de l'anneau de maintien 704 et sont ainsi communicantes.

Chaque insert de maintien 706 est également logé dans la canalisation de recouvrement 702 et il prend la forme d'une étoile disposée entre les canalisations 104. Chaque branche de l'étoile s'insère entre deux canalisations 104 voisines, et entre deux branches voisines est arrangée une deuxième empreinte 706a à travers laquelle passe une canalisation 104. Chaque insert de maintien 706 présente ainsi pour chaque canalisation 104, une deuxième empreinte 706a à travers laquelle passe la canalisation 104. Chaque deuxième empreinte 706a est ouverte vers l'extérieur.

La figure 11 montre un arrangement particulier qui peut être mis en œuvre dans le cadre du premier ou du deuxième mode de réalisation.

Cet arrangement particulier est mis en place au niveau d'un bord supérieur 103 de la dérive 101. Les canalisations 104 qui longent le longeron avant 102 s'infléchissent au-dessus du bord supérieur 103 pour continuer jusqu'à l'arrière de la dérive 101 et rejoindre les buses 18. Chaque canalisation 104 présente ainsi une section 104a qui s'étend le long du bord supérieur 103.

Afin de protéger les sections 104a, en particulier des chocs d'oiseaux, l'ensemble de dérive 100 comporte une cage 1102 qui est solidaire de la dérive 101 à laquelle elle est fixée par tous moyens de fixation appropriés. Chaque section 104a est arrangée entre la dérive 101 et la cage 1102 qui la protège, entre autres des chocs d'oiseaux.

La cage 1102 prend la forme d'un coin fixé à l'intersection du longeron avant 102 et du bord supérieur 103 et elle est équipée d'un prolongement 1104 qui s'étend au-dessus des sections 104a et du bord supérieur 103.

## Revendications

1. Ensemble de dérive (100) pour un aéronef (10), ledit ensemble de dérive (100) comportant :
- une dérive (101) avec un longeron avant (102),
- une pluralité de nervures (150), où les nervures (150) sont disposées le long du longeron avant (102), où chaque nervure (150) présente un pied (152) solidaire du longeron avant (102) et une tête (154) solidaire du pied (152),
- au moins une canalisation (104) s'étendant le long du longeron avant (102) et à l'arrière de chaque tête (154), et
- un capot (106) fixé aux têtes (154) et recouvrant ladite au moins une canalisation (104), **caractérisé en ce que** pour au moins une canalisation (104), ledit ensemble de dérive (100) comporte un canal (250) comportant un caniveau (252) dans lequel est fixée ladite au moins une canalisation (104), où le caniveau (252) est fixé aux nervures (150) et présente des parois latérales (252a-b) délimitant entre elles une ouverture (254) et s'étendant jusqu'au capot (106) où le caniveau (252) présente à l'opposé de l'ouverture (254) un fond (256).

2. Ensemble de dérive (100) selon la revendication 1, **caractérisé en ce qu'**entre deux nervures (150) successives, ledit ensemble de dérive (100) comporte une poutre (202) fixée entre les têtes (154) desdites nervures (150) successives.

3. Ensemble de dérive (100) selon l'une des revendications 1 ou 2, **caractérisé en ce que** le capot (106) est percé de fenêtres de ventilation (106a).

4. Ensemble de dérive (100) selon l'une des revendications 1 à 3, **caractérisé en ce que** le capot (106) est percé d'au moins un orifice (106b) et **en ce que** pour ledit au moins un orifice (106b), l'ensemble de dérive (100) comporte un système d'aération (302) fluidiquement connecté audit orifice (106b) et assurant un effet Venturi.

5. Ensemble de dérive (100) selon la revendication 3, **caractérisé en ce que** les fenêtres de ventilation (106a) sont en continuité fluidique avec l'ouverture (254).

6. Ensemble de dérive (100) selon la revendication 4, **caractérisé en ce que** les orifices (106b) sont en continuité fluidique avec l'ouverture (254).

7. Ensemble de dérive (100) selon l'une des revendications précédentes, **caractérisé en ce que** le caniveau (252) comporte un plancher intermédiaire (258) qui sépare le caniveau (252) en un caniveau supérieur dans lequel est fixée ladite au moins une canalisation (104) et un caniveau inférieur dans lequel circule de l'air, et **en ce que** le plancher intermédiaire (258) est percé de trous (260).

8. Ensemble de dérive (100) selon l'une des revendications précédentes, **caractérisé en ce que** la dérive (101) présente un bord supérieur (103), **en ce que** ladite au moins une canalisation (104) présente une section (104a) qui s'étend le long dudit bord supérieur (103) et **en ce que** ledit ensemble de dérive (100) comporte une cage (1102) solidaire de la dérive (101) et où ladite section (104a) est arrangée entre la dérive (101) et la cage (1102).

9. Aéronef (10) comportant un fuselage (12) et un ensemble de dérive (100) selon l'une des revendications précédentes, où la dérive (101) est fixée à l'arrière du fuselage (12).
